# EUROPEAN PATENT APPLICATION

(11) **EP 2 518 442 A1**
(43) Date of publication of application: **31.10.2012**
(21) Application number: 10839187.1
(22) Date of filing: 08.12.2010
(51) Int. Cl.: G01C 21/00, G09B 29/00, G09B 29/10

(54) **NAVIGATION DEVICE**

(30) Priority: 25.12.2009 JP 2009295235
(71) Applicant: Clarion Co., Ltd., Saitama 330-0081 (JP)
(72) Inventor: SATO, Koichi, Saitama-shi Saitama 330-0081 (JP)
(74) Representative: MERH-IP Matias Erny Reichl Hoffmann
(86) International application number: PCT/JP2010/072016
(87) International publication number: WO 2011/077953

(57) **Abstract**

A navigation device includes: a data storage means for storing map data including information relating to a map, and information relating to positions and usage fees of facilities; a budget range determination means for determining a range of budget desired by a user; a facility search means for searching the facilities under a predetermined search condition; and a display means for displaying a facility list that lists up a facility, for which the usage fee complies with the range of budget, out of the searched facilities searched by the facility search means is indicated with emphasis.

## Description

### TECHNICAL FIELD

The present invention relates to a navigation device that conducts search of facilities.

### BACKGROUND ART

Heretofore, a navigation device is known which displays a list of searched facilities arranged such that a facility closer to the current location of a vehicle in which the navigation device is mounted is preceded (see Patent Literature 1).

### CITATION LIST

### PATENT LITERATURE

[PATENT LITERATURE 1] Japanese Laid-Open Patent Publication No. 2008-175567

### SUMMARY OF INVENTION

### TECHNICAL PROBLEM

It sometimes happens that when one arrives at a facility searched by a navigation device, the searched facility is not available due to its usage fee.

### SOLUTION TO PROBLEM

According to the first aspect of the present invention, a navigation device comprises: a data storage means for storing map data including information relating to a map, and information relating to positions and usage fees of facilities; a budget range determination means for determining a range of budget desired by a user; a facility search means for searching the facilities under a predetermined search condition; and a display means for displaying a facility list that lists up a facility, for which the usage fee complies with the range of budget, out of the searched facilities searched by the facility search means is indicated with emphasis.

According to the second aspect of the present invention, in the navigation device according to the first aspect, the data storage means may store a plurality of pieces of information relating to the usage fees corresponding to a plurality of time zones, respectively, the budget range determination means may determine a plurality of the ranges of budget that corresponds to the plurality of time zones, and the display means may display the facility list that list up a facility, for which the usage fee for a time zone corresponding to current time is within the budget range, out of the searched facilities searched by the facility search means is indicated with emphasis.

According to the third aspect of the present invention, in the navigation device according to the first aspect, the display means may display a facility, for which the usage fee is within the budget range, out of the searched facilities searched by the facility search means, on a higher level in the facility list.

According to the fourth aspect of the present invention, in the navigation device according to the first aspect, the display means may display, in the facility list, a facility, for which the usage fee is within the range of budget, out of the searched facilities searched by the facility search means, together with a mark indicating that the usage fee therefor is within the range of budget.

According to the fifth aspect of the present invention, in the navigation device according to the first aspect, the navigation device may further comprise a money amount storing means for storing a total amount of money paid by the user during one day. The budget range determination means determines a desired budget for one day, and the display means calculates a balance by subtracting the total amount of money stored by the money amount storing means from the desired budget, and displays a facility list of a facility indicated with emphasis, for which the usage fee is not larger than the balance, out of the searched facilities searched by the facility search means.

### ADVANTAGEOUS EFFECT OF INVENTION

According to the present invention, searched facilities can be displayed with emphasis being laid on a facility whose usage fee complies with a user's desired budget.

### BRIEF DESCRIPTION OF DRAWINGS

[FIG. 1] A block diagram showing the construction of a navigation device according to an embodiment of the present invention.
[FIG. 2] A diagram illustrating data relating to facilities according to an embodiment of the present invention.
[FIG. 3] A diagram illustrating a budget determination screen according to an embodiment of the present invention.
[FIG. 4] A diagram illustrating search condition setting operation according to an embodiment of the present invention.
[FIG. 5] A diagram illustrating a search result display screen according to an embodiment of the present invention.

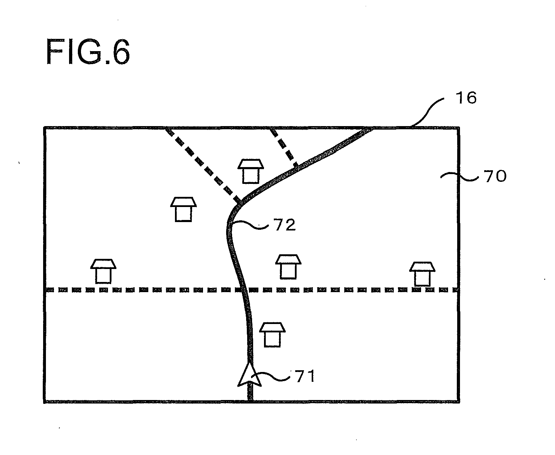

[FIG. 6] A diagram illustrating a route guidance screen according to an embodiment of the present invention.
[FIG. 7] A flowchart illustrating route guidance processing for guiding toward a searched facility according to an embodiment of the present invention.
[FIG. 8] A flowchart illustrating route guidance processing for guiding toward a searched facility according to an embodiment of the present invention.

### DESCRIPTION OF EMBODIMENTS

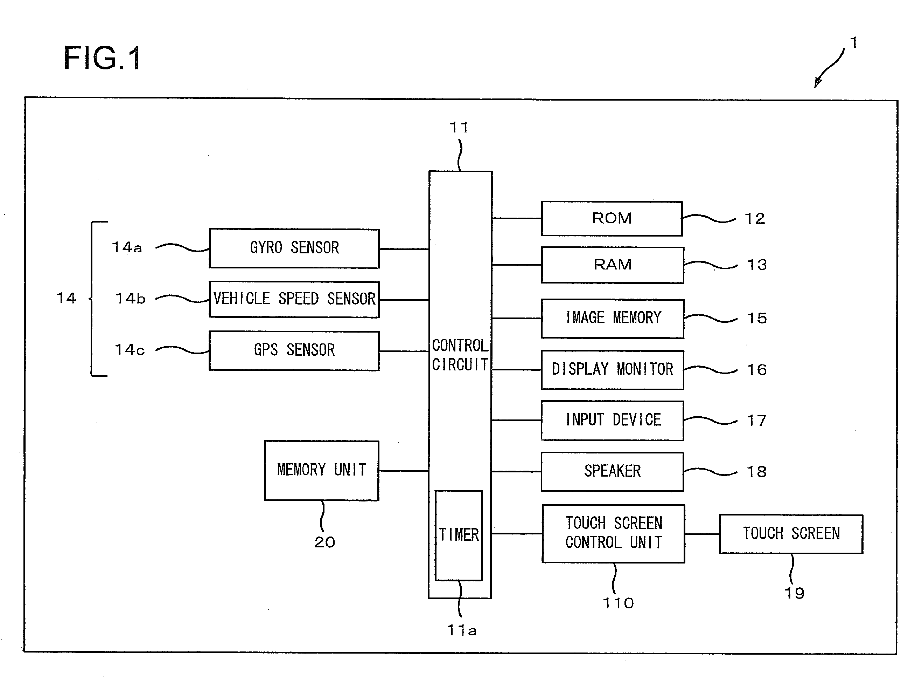

The construction of a navigation device 1 according to an embodiment of the present invention is explained with reference to FIG. 1. The navigation device 1 can conduct facility search and display facilities that have been searched on a display monitor 16 in the form of a list. The navigation device 1 includes a control circuit 11, a ROM 12, a RAM 13, a current location detection device 14, an image memory 15, a display monitor 16, an input device 17, a speaker 18, a touch screen 19, and a memory unit 20.

The control circuit 11 includes a microprocessor and its peripheral circuits. The control circuit 11 conducts various types of controls by executing a control program stored in and read out from ROM 12 in a RAM 13 serving as a working area. The control circuit 11 conducts a predetermined route search processing based on map data stored in the memory unit 20 and displays the result of the processing as a route on the display monitor 16. Also, the control circuit 11 has a timer 11a so that time can be measured.

The current location determination device 14 is a device that detects a current location of the vehicle. The current location determination device 14 includes a gyro sensor 14a, a vehicle speed sensor 14b, a GPS (Global Positioning System) sensor 14c, and so on.

The gyro sensor 14a detects a travelling direction of the vehicle. The vehicle speed sensor 14b detects a speed of the vehicle. The GPS sensor 14c detects its current location based on GPS signals transmitted from a GPS satellite. The current location determination device 14 detects the current location of the vehicle by using information detected by the devices 14a to 14c.

The navigation device 1 determines a range in which a map is to be displayed based on the current location of the vehicle detected by the current location determination device 14. The navigation device 1 displays the current location on the map.

The image memory 15 stores image data to be displayed on the display monitor 16. The image data, which includes data for depicting a map and various graphic data, is generated appropriately based on the map data stored in the memory unit 20. The navigation device 1 can display a map and the like on the display monitor 16 by using the image data created in this manner.

The touch screen 19 is a transparent touch switch laminated on a surface of the display monitor 16, through which an image to be displayed is displayed on the display monitor 16. When a button displayed on the display monitor 16, an item of the menu screen or the like is pressed with a finger of the user, the touch screen 19 is pressed. This causes the touch screen 19 to output a signal corresponding to the pressed position to a touch screen control unit 110. The touch screen control unit 110 calculates the pressed position of the touch screen 19 based on the signal output from the touch screen 19 and outputs a result of calculation to the control circuit 11. And, the control circuit 11 conducts controls so that the processing defined by one of various buttons or of menu items that has been pressed can be executed.

The memory unit 20 is a rewritable, non-volatile memory device, for example, a hard disk drive, that stores the map data for displaying a map on the display monitor 16 as well as the settings of the navigation device 1.

The map data includes data for displaying a map, data for searching a route, facility data, and so on. The data for displaying a map and the data for searching a route include link information and node information of roads. The data for displaying a map contains a plurality of pieces of map data of different scale sizes ranging from "regional" to "detail" and the scale size of the displayed map can be changed in response to the user's request.

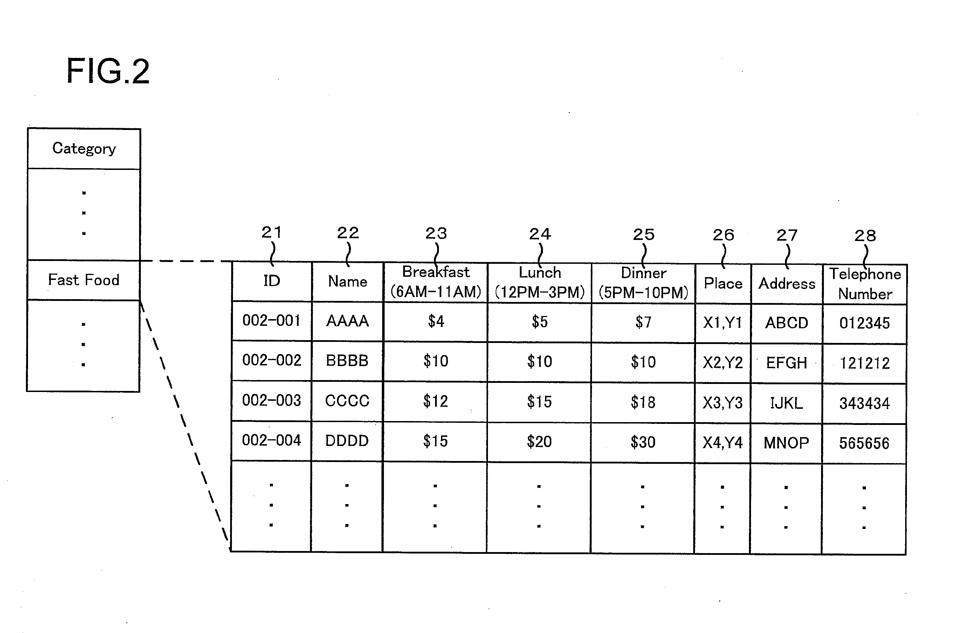

The facility data is classified based on the category of facilities as shown in FIG. 2. Information relating to facilities is stored category by category. The information relating to facilities stored includes facility ID 21 for identifying a particular facility, name 22 of the facility, usage fees 23 to 25 for a plurality of time zones, positional coordinates 26 of the facility, address 27 of the facility, and phone number 28 of the facility.

FIG. 2 shows examples of the usage fees 23 to 25 for a plurality of time zones, including a usage fee 23 for a time zone of breakfast (6:00 a.m. to 11 a.m.), a usage fee 24 for a time zone of lunch (12:00 p.m. to 3:00 p.m.), and a usage fee 25 for a time zone of dinner (5:00 p.m. to 10:00 p.m.) at a fast food shop. It is to be noted that the number of time zones is not limited to 3 but at least 1 suffices.

For example, in the category of facility "Fast Food", there is stored the following information in relation to the facility that has facility ID "002-001". The name 22 of the facility is "AAAA" and the usage fee 23 for the time zone of breakfast (6:00 to 11:00 a.m.) is "$4". The usage fee 24 for the time zone of lunch (12:00 to 3:00 p.m.) is "$5", and the usage fee 25 for the time zone of dinner (5:00 to 10:00 p.m.) is "$7". The positional coordinates 26 of the facility are "X1, X2", the address 27 of the facility is "ABCD", and the phone number 28 of the facility is "012345".

It is to be noted that the map data may be read out from a DVD-ROM or a CD-ROM.

The display monitor 16 displays various pieces of information including a map of the periphery of the current location of the vehicle and a menu screen. The input device 17 includes operation keys with which the user can set various commands and so on. They are realized by push-button switches or the like on the operation panel. The speaker 18 outputs voice to the user for helping the user understand how to operate the device or for route guidance.

The user can set a destination by operating the input device 17 or the touch screen 19 according to an instruction on the screen of the display monitor 16 or a voice instruction from the speaker 18.

When a destination is set by the user, a start point for route search is set at the current location and an end point for route search is set at the destination. Then, route calculation from the start point to the end point is conducted based on a predetermined algorithm. The route thus obtained is displayed on the display monitor 16 in such a manner that it is discriminated from other roads by changing the manner of display, for example, display color. As a result, the user can recognize the route displayed on the display monitor 16. The navigation device 1 gives instruction for driving the vehicle to the user on the screen or by voice or any other means for route guidance of the vehicle so that the vehicle can travel along the guided route from the start point to the destination.

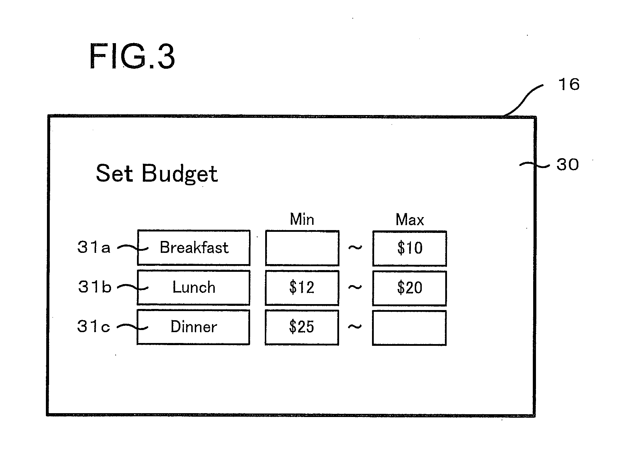

With reference to FIG. 3, a budget setting screen on which the user can input his or her desired budget to determine it is explained. When a desired budget is to be input to the navigation device 1, "Budget Setting" is selected on the menu screen (not shown). As a result, a budget setting screen 30 is displayed on the display monitor 16 as shown in FIG. 3.

On the budget setting screen 30, there is displayed entry fields in which minimum and maximum values of budgets for breakfast 31a, lunch 31b, and dinner 31c can be input. The user can input minimum and maximum values of budgets by operating the input device 17. On the budget setting screen 30 shown in FIG. 3, the budget for the breakfast 31a is equal to 10 dollars or less, the budget for the lunch 31b is equal to 12 dollars or more and equals to 20 dollars or less. The budget for the dinner 31c is 25 dollars or more. When the desired budgets are those values shown in FIG. 2, the usage fees "AAAA" and "BBBB" for breakfast are within the range of desired budget. As for lunch, the usage fees "CCCC" and "DDDD" are within the range of desired budget. Similarly, the usage fee "DDDD" is within the range of desired budget. The desired budgets of the user are determined to be the values input on the budget setting screen 30 and are stored in the memory unit 20.

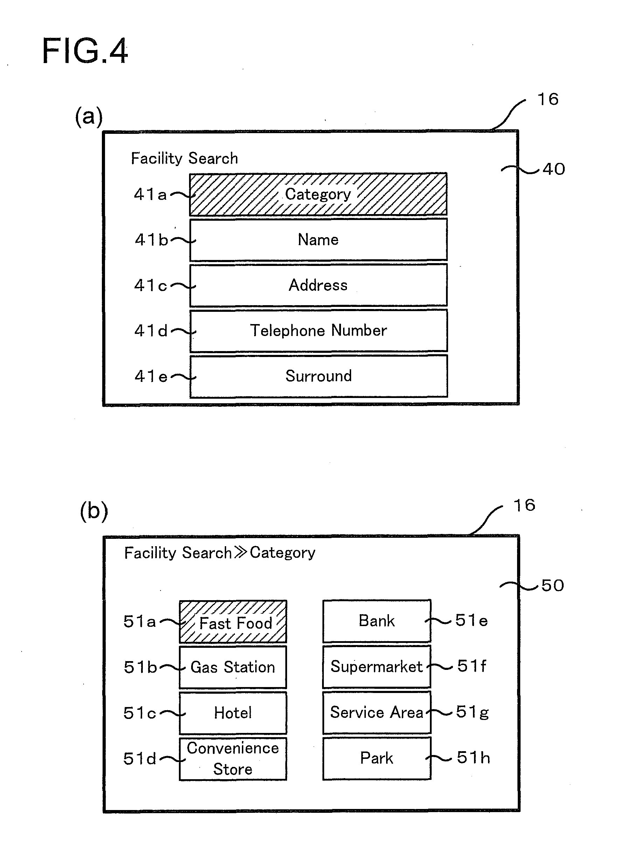

With reference to FIG. 4, the operation of facility search is explained. When facility search is conducted, "Facility Search" is selected on the menu screen (not shown). As a result, a facility search method selection screen 40, which is a menu screen for selecting the method of facility search, is displayed on the display monitor 16 as shown in FIG. 4(a). On the facility search method selection screen 40, there are displayed items 41a to 41e that indicate methods of facility search, respectively. The user can select a desired method of facility search by pressing one of the items 41a to 41e.

The item 41a is an item that designates search by category of facility. The item 41b is an item that designates search by name of facility. The item 41c is an item that designates search by address of facility. The item 41d is an item that designates search by telephone number of facility. The item 41e is an item that designates by surround of the current location. When it is desired to conduct facility search by category of facility, the user presses a button corresponding to the item 41a.

When the user presses the button corresponding to the item 41a shown in FIG. 4(a), the category selection screen 50 shown in FIG. 4(b) is displayed on the display monitor 16. The category selection screen 50 is a menu screen on which a category of facility, which is a search condition when facility search is conducted, can be selected. Hereafter, the menu screen 50 is called a category selection screen. On the category selection screen 50, there are displayed items 51a to 51h that indicate categories of facilities, respectively. The user can select a category of search condition by pressing one of the items 51a to 51h. Then, a facility in the category selected by the user is searched.

The item 51a is an item of fast food shops. The item 51b is an item of gas stations. The item 51c is an item of hotels. The item 51d is an item of convenience stores. The item 51e is an item of banks. The item 51f is an item of supermarkets. The item 51g is an item of service areas. The item 51h is an item of parks. When the user desires to search a facility for fast food, he or she is supposed to presses the item 51a.

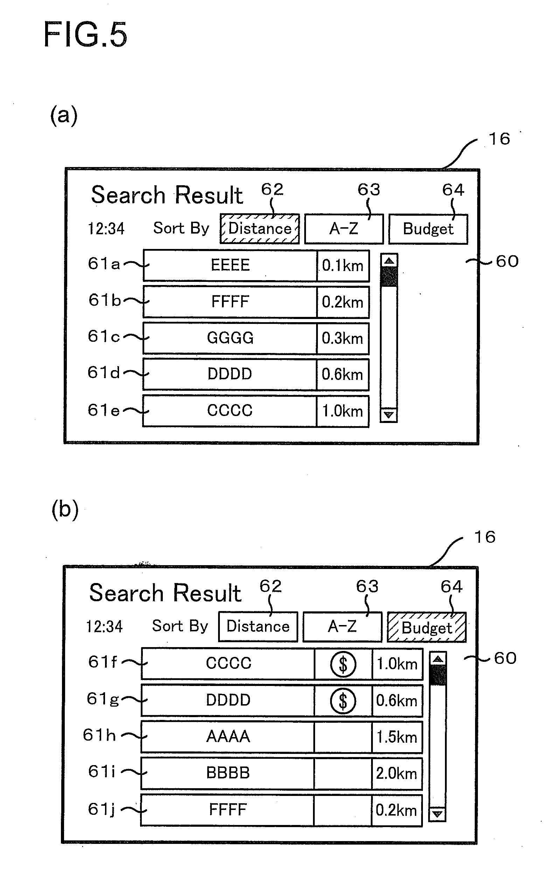

FIG. 5 presents a diagram illustrating a search result display screen 60 that shows the result of facility search. When the facility search is completed, the search result display screen 60 is displayed on the display monitor 16. On the search result display screen 60, there is displayed a list of the searched facilities 61a to 61e together with respective distances between each of the facilities 61a to 61e and the current location. The facilities 61a to 61e are displayed on higher levels in the list when the respective distances between the current location and each of them are smaller.

On the test result display screen 60, there are displayed a distance button 62, an alphabetical order button 63, and a budget button 64. When the user presses the distance button 62, the facilities 61a to 61e are displayed on higher levels in the list as they have smaller distances between the current location and each of them. When the user presses alphabetical order button 63, the searched facilities are displayed in alphabetical order. When the user presses the budget button 64, the searched facilities 61f to 61j are displayed in the form of a list together with respective distances between each of the facilities 61f to 61j and the current location as shown in FIG. 5(b). In this case, those facilities whose usage fees are within a range which is not smaller than the minimum value of the budget and not larger than the maximum value of the budget that are set on the budget setting screen 30 shown in FIG. 3 are displayed on higher levels in the list. Dollar marks are displayed in relation to those facilities whose usage fees are within the budget.

When the user presses one of the facilities displayed on the search result display screen 60, route search is conducted with that facility being defined as a destination and the current location being defined as a departure place. When the route search is completed, a map 70 showing a circumference of the current location is displayed on the display monitor 16 as shown in FIG. 16 and the route guidance is started. On the map 70, there are displayed a user's vehicle mark 71 that shows the current location of the vehicle and a searched route 72.

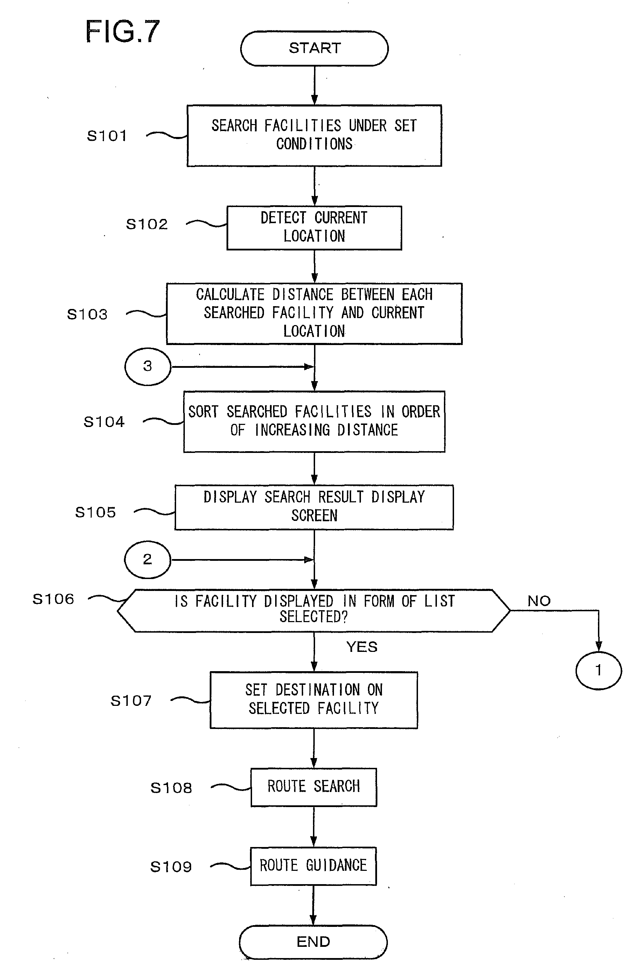

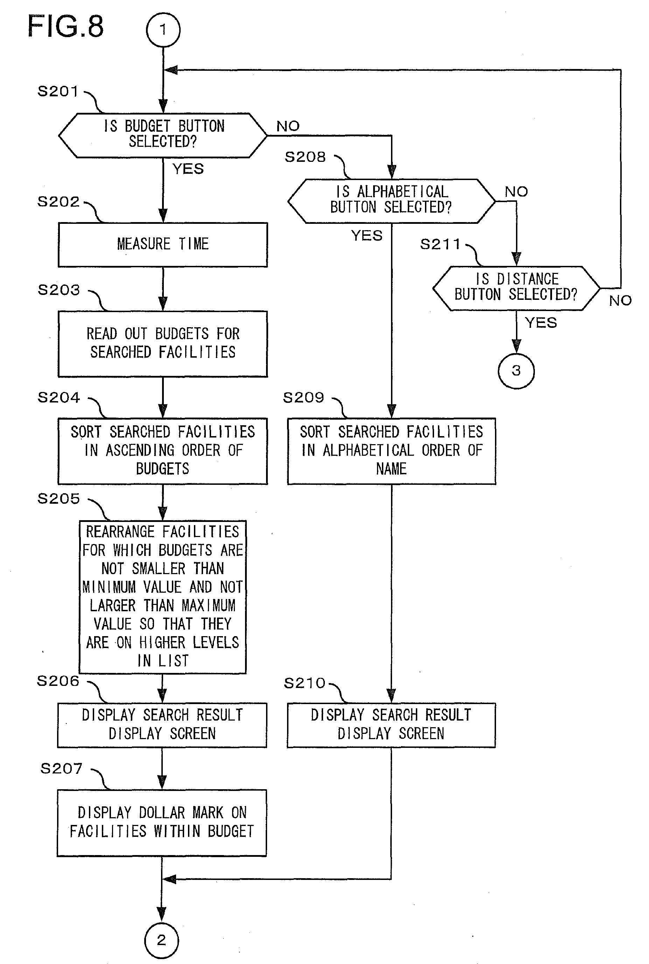

Then, with reference to the flowcharts shown in FIGS. 7 and 8, there is explained route guidance processing for guiding the vehicle toward the searched facility according to an embodiment of the present invention. The processing shown in FIGS. 7 and 8 is executed by the control circuit 11 according to a program that is started up when the search conditions for searching facilities are set.

In step S101, the control circuit 11 searches facilities by using the facility data under the set search conditions.

In step S 102, the control circuit 11 detects a current location of the vehicle by using the current location detection device 14.

In step S103, the control circuit 11 acquires from the facility data the positional coordinates 26 of each of the searched facilities that have been searched in step S101, and then calculates a distance between each of the searched facilities and the current location.

In step S104, the control circuit 11 sorts the searched facilities that have been searched in step S101 in order of increasing distance from the current location.

In step S105, the control circuit 11 arranges the facilities searched in step S101 and their distances from the current location in order of the sorting in step S104, and displays them in the form of a list as a search result display screen on the display monitor 16.

In step S106, the control circuit 11, based on a pressed down position of the touch screen 19 calculated by the control unit 110, determines whether the facility list displayed is selected by pressing the touch screen 19 by the user. When one of the facilities displayed in the form of a list is selected, a positive decision is made on step S106 and the process proceeds to step S107. When no facility is selected, a negative decision is made on step S106 and the process proceeds to step S201 shown in FIG. 7.

In step S107, the control circuit 11 sets a destination at the selected facility via the touch screen 16.

In step S108, the control circuit 11 searches a route from the departure place to the destination.

In step S109, the control circuit 11 conducts route guidance by causing a map showing a circumferential area of the current location indicating the searched route to be displayed on the display monitor 16 and causing voice for route guidance to be output from the speaker 17.

In step S201 illustrated in FIG. 8, the control circuit 11 determines whether the budget button on the search result display screen is selected based on the pressed down position on the touch screen 19 calculated by the touch screen control unit 110. When the budget button is selected, a positive decision is made on step S201 and the process proceeds to step S202. When no budget button is selected, a negative decision is made on step S201, and the process proceeds to step S208.

In step S202, the control circuit 11 measures time by using the timer 11a.

In step S203, the control circuit 11 selects a budget for a time zone that corresponds to the time measured in step S202 out of the usage fee 23 for a time zone of breakfast (6:00 a.m. to 11 a.m.), usage fee 24 for a time zone of lunch (12:00 p.m. to 3:00 p.m.), and usage fee 25 for a time zone of dinner (5:00 p.m. to 10:00 p.m.) in the facility data, and reads out the budget for the facility concerned from the facility data. The read out facility data has a data structure that can be sorted. For example, it may be of a structure of linked list.

In step S204, the control circuit 11 sorts the facilities searched in step S101 in ascending order of their budget.

In step S205, the control circuit 11 rearranges the facilities sorted in step S204 so that those facilities, for which the budgets are not smaller than the minimum value and not larger than the maximum value, can be found on higher levels. By so doing, the facilities searched in step S203 are rearranged in order of those facilities, for which the budgets are not smaller than the maximum value and not larger than the maximum value, those facilities, for which the budgets are below the minimum value, and those facilities, for which the budgets are larger than the maximum value.

In step S206, the control circuit 11 displays, on the display monitor 16, a search result display screen that displays the facilities in the order rearranged in step S205 in the form of a list together with their respective distances from the current location.

In step S207, the control circuit 11 displays a dollar mark on those facilities, for which the usage fees are within the range of the budget. Then, the process returns to step S 106 in FIG. 1.

In step S208, the control circuit 11 determines whether the alphabetical order button on the search result display screen is selected based on a pressed position of the touch screen 19 that has been calculated by the touch screen control unit 110. When the alphabetical order button is selected, a positive decision is made on step S208 and the process proceeds to step S209. When the alphabetical order button is not selected, a negative decision is made on step S208 and the process proceeds to step S211.

In step S209, the control circuit 11 sorts the facilities searched in step S101 in alphabetical order of name of facility.

In step S210, the control circuit 11 displays on the display monitor 16 a search result display screen on which facilities and their respective distances from the current location are displayed in the form of a list arranged in the sorted order. Then, the process returns to step S106.

In step S211, the control circuit 11 determines whether the distance button on the search result display screen is selected based on a pressed position of the touch screen 19 calculated by the touch screen control unit 110. When the distance button is selected, a positive decision is made on step S211 and the process returns to step S104. When the distance button is not selected, a negative decision is made on step S211 and the process returns to step S201.

The navigation device 1 according to this embodiment has the following advantageous effects. (1) The navigation device 1 according to this embodiment includes the memory unit 20 that stores map data containing information relating to a map and information relating to position of facilities and usage fees for the respective facilities. It determines the minimum value and the maximum value of a user's desired budget (FIG. 3) and searches facilities under predetermined search conditions (Step S101 in FIG. 7). The navigation device 1 rearranges searched facilities based on the data relating to usage fees of facilities and the range of budget such that those facilities, for which the budgets for the facilities corresponding to the usage fee data are not smaller than the minimum value and not larger than the maximum value are found on higher levels in the list (steps S204 and S205 in FIG. 8) and the rearranged facilities are displayed with dollar marks (step S207 in FIG. 8). As a result, facilities that comply with user's desired budget can be displayed out of the searched facilities with emphasis.

(2) The navigation device 1 according to this embodiment can separately store usage fee data that represents the budgets for facilities for respective time zones (FIG. 2). It determines the minimum value and the maximum value of the user's desired budget separately for each time zone (FIG. 3). It also rearranges the facilities so that a facility, for which the budget for a time zone corresponding to the current time acquired by the timer 11a is not smaller than the minimum value and not larger than the maximum value of the desired budget for that time zone, are displayed on higher levels in the list (steps S204 and S205 in FIG. 8), and it displays them together with dollar marks (step S207 in FIG. 8). As a result, those with different fees depending on time zone, such as breakfast, lunch, and dinner, can be appropriately dealt with.

(3) The navigation device 1 according to this embodiment is configured to display those facilities, for which the budgets are not smaller than the minimum value and not larger than the maximum value of the desired budget, on higher levels in the list (steps S204 and S205 in FIG. 8). As a result, the user can readily identify a facility that complies with the user's desired budget among the searched facilities.

(4) The navigation device 1 according to this embodiment indicates a predetermined mark such as dollar mark to a facility, for which the budget is not smaller than the minimum value and not larger than the maximum value of the desired budget (step S207 in FIG. 8). As a result, the user can readily identify a facility that complies with the user's desired budget among the searched facilities.

The navigation device 1 according to the embodiment explained above can be modified as follows. (1) The present invention is not limited to those facilities that provide meals such as fast food but is applicable also to accommodations as far as they have information relating to prices that may differ depending on time zone.

(2) It may be configured to conduct search for facilities, for which the usage fees are within the range of the budget for one day. In this case, first, this one day budget is input on a screen for setting one day budget to determine the one day budget. Then, a total amount of expenses during that day (including expenses other than meal charges) is calculated. In case of settlement by using an ETC (Electronic Toll Collection System) card, the navigation device 1 can automatically combine the expenses. When the one day budget is larger than the total amount of expenses during one day, facilities are rearranged so that those that are available with the balance of the one day budget minus the total amount of expenses are found on higher levels in the list and displayed together with a mark such as a dollar mark. In addition to the one day budget, budgets for meals for each time zone may be determined. The one day budget may be determined based on the sum of them. The device may be configured to determine a weekly budget or a monthly budget.

(3) The device may be configured to arrange only those facilities, for which the usage fees are within the set budget range, out of the searched facilities, in order of increasing distance from the current location and display them on the search result screen. The device may be configured to display those facilities, for which the usage fees are within the set budget range, out of the searched facilities, as arranged in alphabetical order on the search result screen.

(4) The order in which facilities are arranged is not limited to alphabetical order as far as the order is based on name. For example, the facilities may be arranged in the order of Japanese alphabet.

The mark to be displayed is not limited to dollar mark as far as it can show that the facility concerned is within the budget range.

Any one of the embodiments may be combined with one or more variations. Also, variations may be combined with each other in any way.

The above explanations are mere examples and the present invention should not be limited by the embodiments described above.

The disclosure of the following priority application is incorporated herein by reference: Japanese Patent Application No. 2009-295235 (filed on December 25, 2009).

## Claims

1. A navigation device, comprising:
a data storage means for storing map data including information relating to a map, and information relating to positions and usage fees of facilities;
a budget range determination means for determining a range of budget desired by a user;
a facility search means for searching the facilities under a predetermined search condition; and
a display means for displaying a facility list that lists up a facility, for which the usage fee complies with the range of budget, out of the searched facilities searched by the facility search means is indicated with emphasis.

2. A navigation device according to claim 1, wherein
the data storage means stores a plurality of pieces of information relating to the usage fees corresponding to a plurality of time zones, respectively,
the budget range determination means determines a plurality of the ranges of budget that corresponds to the plurality of time zones, and
the display means displays the facility list that list up a facility, for which the usage fee for a time zone corresponding to current time is within the budget range, out of the searched facilities searched by the facility search means is indicated with emphasis.

3. A navigation device according to claim 1, wherein
the display means displays a facility, for which the usage fee is within the budget range, out of the searched facilities searched by the facility search means, on a higher level in the facility list.

4. A navigation device according to claim 1, wherein
the display means displays, in the facility list, a facility, for which the usage fee is within the range of budget, out of the searched facilities searched by the facility search means, together with a mark indicating that the usage fee therefor is within the range of budget.

5. A navigation device according to claim 1, further comprising:
a money amount storing means for storing a total amount of money paid by the user during one day, wherein
the budget range determination means determines a desired budget for one day, and
the display means calculates a balance by subtracting the total amount of money stored by the money amount storing means from the desired budget, and displays a facility list of a facility indicated with emphasis, for which the usage fee is not larger than the balance, out of the searched facilities searched by the facility search means.
